**Europäisches Patentamt**

**European Patent Office**

**Office européen des brevets**

(19)

(11) Veröffentlichungsnummer: **0 204 728**
**B1**

(12)

# EUROPÄISCHE PATENTSCHRIFT

(45) Veröffentlichungstag der Patentschrift:
21.09.88

(51) Int. Cl.⁴: **F 16 H 47/08**

(21) Anmeldenummer: **85905624.4**

(22) Anmeldetag: **08.11.85**

(86) Internationale Anmeldenummer:
**PCT/EP 85/00596**

(87) Internationale Veröffentlichungsnummer:
**WO 86/02983 (22.05.86 Gazette 86/11)**

(54) **KRAFTÜBERTRAGUNGSAGGREGAT ZUM ANTRIEB EINER DREHZAHLVARIABLEN ARBEITSMASCHINE.**

(30) Priorität: **16.11.84 DE 3441877**

(43) Veröffentlichungstag der Anmeldung:
**17.12.86 Patentblatt 86/51**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**DE-B-1 133 419**
**FR-A-791 791**
**FR-A-1 578 789**
**US-A-2 368 873**
**US-A-2 961 896**
**US-A-3 023 637**
**US-A-4 281 564**

**Automatische Automobilgetriebe, J.Stüper,**
**Springer-Verlag, Wien. New York, 1965, Seite 143**

(73) Patentinhaber: **VOITH TURBO GMBH & CO. KG,**
**Voithstr. 1, D-7180 Crailsheim (DE)**

(72) Erfinder: **HUMPFER, Rudolf, Schleehardshof 2,**
**D-7181 Satteldorf (DE)**
Erfinder: **WAHL, Georg, Wilhelm- von- Kettelerstr.**
**33, D-7180 Crailsheim (DE)**

(74) Vertreter: **Weitzel, Wolfgang, Dr.- Ing., St.**
**Pöltener Strasse 43, D-7920 Heidenheim (DE)**

## Beschreibung

Die Erfindung betrifft ein Kraftübertragungsaggregat zum Antrieb einer drehzahlvariablen Arbeitsmaschine, im einzelnen mit den Merkmalen a) bis c), die im Oberbegriff des Patentanspruchs 1 angegeben sind.

Ein derartiges Kraftübertragungsaggregat mit oder ohne hydrodynamischer Eingangs-Kupplung ist bekannt aus der AT-PS-275 988, Fig. 2 oder 4. Es dient zum Antrieb einer Arbeitsmaschine, deren Drehzahl in einem gewissen Bereich, der im einen Fall größer im anderen kleiner sein kann, variabel sein soll. Vorausgesetzt ist - wie auch beim Anmeldungsgegenstand - daß die Antriebsmaschinen-Drehzahl weitgehend oder vollkommen konstant ist. Ein wesentliches Element des Aggregates ist ein Differentialgetriebe mit drei Getriebegliedern, von denen eines an eine festbremsbare Überlagerungswelle und an das Turbinenrad eines hydrodynamischen Drehmomentwandlers gekoppelt ist. Die anzutreibende Arbeitsmaschine ist in der Regel eine Strömungsmaschine, z. B. Kreiselverdichter oder Kreiselpumpe, insbesondere eine Kesselspeisepumpe.

Gemäß Fig. 2 der AT-PS ist folgendes vorgesehen: In einem unteren Betriebsdrehzahlbereich findet die Kraftübertragung allein über eine hydrodynamische Kupplung, die auch "Eingangskupplung" genannt werden kann, und über das erste und das zweite Getriebeglied des Differentialgetriebes statt. In diesem Betriebszustand ist die Überlagerungswelle mittels eines Freilaufs festgebremst und der Drehmomentwandler ist ausgeschaltet, d.h. entleert. Die Drehzahl der Arbeitsmaschine kann durch Variieren des Kupplungsfüllungsgrades und somit des Kupplungsschlupfes verändert werden. Dem sind aber Grenzen gesetzt dadurch, daß der Wirkungsgrad mit zunehmendem Schlupf immer schlechter wird. Wenn parallel zur hydrodynamischen Kupplung eine Überbrückungskupplung vorgesehen ist, dann kann diese dazu benutzt werden, um die Arbeitsmaschine an der obersten Grenze des unteren Betriebsdrehzahlbereiches anzutreiben. Hierbei ist zwar der Wirkungsgrad sehr hoch; aber die Drehzahl kann nicht variiert werden.

Soll die Arbeitsmaschine mit einer erhöhten Drehzahl (also innerhalb eines oberen Drehzahlbereiches) angetrieben werden, so wird der hydrodynamische Drehmomentwandler durch Füllen eingeschaltet; wodurch sich der Freilauf löst. Hierdurch wird nunmehr ein Teil der Antriebsleistung abgezweigt und über den Drehmomentwandler und über das dritte Getriebeglied des Differentialgetriebes auf die Abtriebswelle übertragen. (Dies ist der sogenannte "Überlagerungszweig".) Damit in diesem Betriebszustand die Abtriebsdrehzahl variiert werden kann, ist als Drehmomentwandler ein Stellwandler vorgesehen, vorzugsweise ein Wandler mit verstellbaren Leitschaufeln.

In dem Überlagerungszweig muß ein Drehmomentwandler (und nicht eine Kupplung) vorgesehen werden, weil nur dieser in der Lage ist, beim Umschalten in den oberen Drehzahlbereich das hohe Drehmoment der Überlagerungswelle mit erträglichen Verlusten und vertretbarem Bauaufwand zu übertragen.

Die aus Fig. 4 der AT-PS bekannte Bauform hat keine hydrodynamische Eingangskupplung; zum Festbremsen der Überlagerungswelle ist eine mechanische Bremse vorgesehen. Diese Bauform arbeitet bei feststehender Überlagerungswelle mit einer nicht-variablen Abtriebsdrehzahl. Nur in dem darüber liegenden oberen Drehzahlbereich ist - wiederum mittels eines Stellwandlers - ein Variieren der Abtriebsdrehzahl möglich.

Der Erfindung liegt die Aufgabe zugrunde, die bekannten Kraftübertragungsaggregate dahingehend weiterzuentwickeln, daß im unteren Betriebsdrehzahlbereich mehr Möglichkeiten zum Variieren der Abtriebsdrehzahl geschaffen werden, ohne daß eine nennenswerte Verminderung des Wirkungsgrades in Kauf genommen werden muß.

Diese Aufgabe wird erfindungsgemäß durch die kennzeichnenden Merkmale des Anspruchs 1 gelöst. Durch das Ausbilden der Bremse als hydrodynamische Bremse, die eine Steuereinrichtuntg zum Einstellen unterschiedlicher Füllungsgrade aufweist, können (durch Variieren des Füllungsgrades der hydrodynamischen Bremse) unterschiedliche Drehzahlen an der Überlagerungswelle auch dann eingestellt werden, wenn der hydrodynamische Drehmomentwandler ausgeschaltet ist. Genauer gesagt: Bei ausgeschaltetem Drehmomentwandler und bei eingeschalteter hydrodynamischer Bremse ist ein Betrieb mit steuerbarem Rückwärts-Drehen der Überlagerungswelle möglich. Theoretisch wäre zwar ein solches Rückwärts-Drehen der Überlagerungswelle auch bei Verwendung einer mechanischen Bremse möglich, jedoch müßte hierbei der an mechanischen Bremsen übliche Verschleiß in Kauf genommen werden. Demgegenüber ermöglicht es die hydrodynamische Bremse, daß die Überlagerungswelle verschleißfrei mit einer verhältnismäßig niedrigen Drehzahl rückwärts umläuft. Wesentlich ist dabei, daß ein Dauerbetrieb ohne Verschleiß möglich ist. Hierdurch werden gegebenenfalls in Kombination mit Merkmalen weiterer Ansprüche zahlreiche Vorteile erzielt:

1. Falls das Aggregat keine hydrodynamische Eingangs-Kupplung aufweist (entsprechend der bekannten Bauform gemäß Fig. 4 der AT-PS-275 988), kann nunmehr auch im unteren Drehzahlbereich durch das schon erwähnte Variieren des Füllungsgrades der hydrodynamischen Bremse die Abtriebsdrehzahl verändert werden (erste Alternativlösung des Anspruchs 1).

2. Falls im Überlagerungszweig gemäß Anspruch 3 (zwischen Wandler und Differentialgetriebe) ein Getriebe, vorzugsweise ein Planeten-Standgetriebe vorhanden ist, wird der Nachteil der bekannten Bauformen vermieden, daß im unteren Betriebsdrehzahlbereich (d.h. wenn der Wandler ausgeschaltet ist) die Zahnräder des Standgetriebes stillstehen. Ein solcher Stillstand kann nämlich zur Folge haben, daß sich im Dauerbetrieb unter Last an den Zahnrädern und an den Lagern des Standgetriebes sogenannte Standmarken bilden.

3. Wenn eine hydrodynamische Eingangs-Kupplung vorhanden ist, dann kann - bei Kraftübertragung im unteren Drehzahlbereich über die hydrodynamische Kupplung - deren Schlupf auf einen kleineren Wert eingestellt werden, so daß die Verluste in der hydrodynamischen Kupplung im Dauerbetrieb kleiner sind (zweite Alternativlösung nach Anspruch 1).

Insbesondere ist es möglich, die Kupplung mit dem maximalen Füllungsgrad zu betreiben, wobei der Flüssigkeitsumlauf durch den äußeren Kreislauf unterbunden werden kann, so daß die dort verursachten Verluste vermieden werden.

4. Falls eine hydrodynamische Kupplung mit Überbrückungskupplung vorhanden ist (Anspruch 6), kann gleichzeitig mit dem Schließen der Überbrückungskupplung eine Teil-Entleerung der hydrodynamischen Bremse ausgelöst werden, so daß ein Sprung in der Abtriebsdrehzahl und der damit verbundene Drehmomenten-Stoß vermieden wird. Zugleich kann trotz geschlossener Überbrückungskupplung die Abtriebsdrehzahl durch Variieren des Füllungsgrades der hydrodynamischen Bremse verändert werden.

Zwar ist es aus der DE-OS-3 144 902 schon bekannt, eine hydrodynamische Bremse zum Abbremsen eines Getriebegliedes eines Differentialgetriebes zu verwenden. Dort handelt es sich jedoch um ein Schaltgetriebe, in dem die hydrodynamische Bremse dazu benutzt wird, um die Antriebswelle des Schaltgetriebes aus dem Stillstand heraus in Rotation zu versetzen, wonach der Rotor der hydrodynamischen Bremse mittels einer mechanischen Bremse stillgesetzt wird.

Bei den eingangs erwähnten bekannten Bauformen ist das Pumpenrad des Stellwandlers über mehrere Zahnräder und über eine versetzt angeordnete Welle mit der Zwischenwelle verbunden. In ähnlicher Weise ist das Turbinenrad des Stellwandlers über eine versetzt angeordnete Welle und über Zahnräder mit dem Differentialgetriebe verbunden. Wegen der Größe dieser Zahnräder kann die Gefahr bestehen, daß Schwingungen in dem Kraftübertragungsaggregat auftreten. Außerdem sind eine Vielzahl von Lagern und ein verhältnismäßig großes Gehäuse erforderlich. Deshalb kann gemäß Anspruch 2 vorgesehen werden, alle wesentlichen Aggregat-Elemente zueinander koaxial anzuordnen. Hierdurch kann eine kompakte, schwingungsarme und mit noch weniger Verlusten behaftete sowie mit geringerem Aufwand herstellbare Konstruktion erzielt werden. Im einfachsten Fall, nämlich wenn die maximale Ausgangsdrehzahl ungefähr gleich oder nur wenig größer als die Eingangsdrehzahl sein soll, werden außer dem Differentialgetriebe keine weiteren Zahnräder benötigt. In vielen Anwendungsfällen wird jedoch eine höhere Gesamtübersetzung gefordert, so daß zwischen dem Wandler und dem Differentialgetriebe ein Getriebe, in der Regel ein Untersetzungsgetriebe, angeordnet werden muß.

In diesem Falle kann dieses Getriebe als Planeten-Standgetriebe ausgebildet und ebenfalls koaxial zu den übrigen Aggregate-Elementen angeordnet werden (Anspruch 3).

Eine koaxiale Anordnung aller Aggregat-Elemente ist zwar schon bekannt aus der DE-OS-1 500 520. Dort sind jedoch Kraftübertragungsaggregate anderer Art beschrieben, nämlich solche, bei denen im oberen Drehzahlbereich die gesamte zu übertragende Leistung über eine zusätziche hydrodynamische Kraftübertragungseinheit (Kupplung oder Wandler) geleitet werden muß, die im unteren Drehzahlbereich durch Entleeren ausgeschaltet ist. Diese zusätzliche Einheit erfordert somit einen hohen Bauaufwand. Beim Anmeldungsgegenstand braucht dagegen die zusätzliche Einheit (d.h. der hydrodynamische Drehmomentwandler) nur für einen kleinen Teil der im oberen Drehzahlbereich zu übertragenden Gesamtleistung bemessen zu werden. Denn der Hauptteil dieser Gesamtleistung wird nach wie vor auf dem normalen Kraftweg übertragen. Deshalb wird nur ein verhältnismäßig kleiner Wandler benötigt, so daß dessen relativ schlechter Wirkungsgrad den Gesamt-Wirkungsgrad nur geringfügig vermindert.

Die Ansprüche betreffen Ausführungen mit oder ohne hydrodynamische Eingangskupplung. Bevorzugt werden jedoch die Ausführungsbeispiele mit einer solchen Eingangskupplung.

Es versteht sich, daß das Differentialgetriebe, wie bei der bekannten Konstruktion, vorzugsweise als Planeten-Umlaufrädergetriebe ausgebildet wird. Dabei können das Sonnenrad, der Planetenträger und das Hohlrad dieses Umlaufrädergetriebes je nach dem Bedarfsfall unterschiedlich mit den übrigen Aggregate-Elementen verbunden sein. Vorzugsweise wird das Umlaufrädergetriebe als "Sammelgetriebe" betrieben; eine Ausführung als "Verteilergetriebe" ist jedoch ebenfalls möglich.

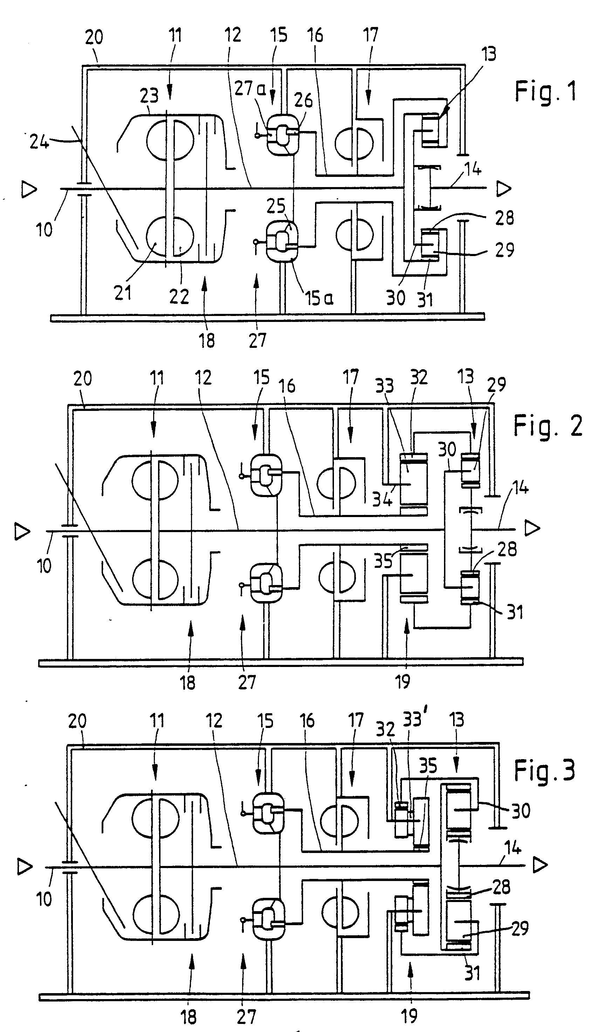

Verschiedene vorteilhafte Ausführungsformen der Erfindung sind in den weiteren Unteransprüchen angegeben. Sie werden nachfolgend anhand der Zeichnung im einzelnen erläutert. Darin zeigt jede der Figuren 1 bis 5 ein Kraftübertragungsaggregat in einem schematisch vereinfachten Längsschnitt.

In allen Figuren sind funktionsgleiche Aggregat-Elemente wie folgt mit den gleichen

Bezugszeichen versehen:

10 Eingangswelle,
11 hydrodynamische Kupplung,
12 Zwischenwelle,
13 Differentialgetriebe (= Planeten-Umlaufgetriebe),
14 Ausgangswelle,
15 hydrodynamischer Drehmomentwandler (vorzugsweise als Stellwandler ausgebildet),
16 Überlagerungswelle,
17 hydrodynamische Bremse

In den Figuren 1 bis 3 ist zusätzlich eine parallel zur hydrodynamischen Kupplung 11 angeordnete Überbrückungskupplung 18 vorgesehen. In den Figuren 2 und 3 ist zusätzlich zwischen dem Stellwandler 15 und dem Differentialgetriebe 13 ein Planeten-Standgetriebe 19 angeordnet. Ein Aggregatgehäuse ist in allen Figuren mit 20 bezeichnet.

Die folgenden Einzelteile sind wiederum in allen Ausführungsformen vorhanden, jedoch teilweise nur in Fig. 1 mit Bezugszeichen versehen:

21 mit der Eingangswelle 10 rotierendes Primärschaufelrad der Kupplung 11,
22 mit der Zwischenwelle 12 rotierendes Sekundärschaufelrad der Kupplung 11,
23 mit der Eingangswelle 10 rotierende Kupplungsschale,
24 bewegliches Schöpfrohr der Kupplung 11,
25 Pumpenrad des Stellwandlers 15 (rotiert in Fig. 1 - 3 mit der Zwischenwelle 12, in Fig. 4 mit der Eingangswelle 10 und in Fig. 5 mit der Ausgangswelle 14),
26 mit der Überlagerungswelle 16 rotierendes Turbinenrad des Stellwandlers 15,
27 Verstelleinrichtung für die schwenkbaren Leitschaufeln 27a des Stellwandlers 15,
28 Sonnenrad des Differentialgetriebes 13,
29 Planetenräder des Differentialgetriebes 13,
30 Planetenträger des Differentialgetriebes 13,
31 Hohlrad des Differentialgetriebes 13.

Der Stellwandler 15 hat, wie dargestellt, vorzugsweise eine feststehende Schale 15a, in der die zentripetal durchströmten Leitschaufeln 27a in bekannter Weise schwenkbar gelagert sind. Beide Schaufelräder, nämlich das Pumpenrad 25 und das Turbinenrad 26, sind, wie ebenfalls dargestellt, vorzugsweise zentrifugal durchströmt. In Figur 1 ist das Turbinenrad 26 mittels der Überlagerungswelle 16 unmittelbar mit dem Differentialgetriebe 13 verbunden; d.h. im Überlagerungszweig fehlt ein Über- oder Untersetzungsgetriebe. In diesem Falle ist es vorteilhaft, die drei Getriebeglieder 28, 30 und 31 des Differentialgetriebes 13 wie folgt mit den übrigen Aggregat-Elementen zu verbinden: Das Sonnenrad 28 mit der Überlagerungswelle 16, den Planetenträger 30 mit der Ausgangswelle 14 und das Hohlrad 31 mit der Zwischenwelle 12.

In Figur 2 ist dagegen zwischen dem Stellwandler 15 und dem Differentialgetriebe 13 ein untersetzendes Planeten-Standgetriebe 19 angordnet. Deshalb ist nun das Sonnenrad 28 des Differentialgetriebes 13 mit der Ausgangswelle 14, der Planetenträger 30 mit der Zwischenwelle 12 und das Hohlrad 31 mit dem Hohlrad 32 des Planeten-Standgetriebes 19 gekoppelt. Dessen Planetenräder 33 rotieren auf einem gehäusefesten Planetenträger 34. Sein Sonnenrad 35 ist mit der Überlagerungswelle 16 verbunden.

Während in Figur 2 das Planeten-Standgetriebe 19 einfache Planetenräder 33 aufweist, die sowohl mit dem Hohlrad 32 als auch mit dem Sonnenrad 35 kämmen, ist in Figur 3 folgendes vorgesehen: Hier hat das Planeten-Standgetriebe 19 Doppel-Planeten 33', deren Radhälften unterschiedliche Durchmesser aufweisen. Die kleinere Radhälfte kämmt mit dem Hohlrad 32 und die größere Radhälfte mit dem Sonnenrad 35. Diese Anordnung dient zur Erzielung einer größeren Untersetzung zwischen dem Sonnenrad 35 und dem Hohlrad 32. Dies ist günstig, weil in Figur 3, abweichend von Figur 2, das Hohlrad 31 des Differentialgetriebes 13 mit der Zwischenwelle 12 verbunden ist und der Planetenträger 30 mit dem Hohlrad 32 des Planeten-Standgetriebes 19.

Weitere besondere Merkmale der in den Figuren 1 bis 3 dargestellten Ausführungsbeispiele sind in den Ansprüchen 4 bis 6 angegeben. Erwähnt sei noch folgendes: Wenn die hydrodynamische Kupplung 11 entfällt (und somit auch keine Überbrückungskupplung 18 vorhanden ist), dann ist die Zwischenwelle 12 zugleich die Eingangswelle.

Beim normalen Dauerbetrieb findet die Kraftübertragung bei entleertem Stellwandler 15 und eingeschalteter hydrodynamischer Bremse 17 über die hydrodynamische Kupplung 11 oder die Überbrückungskupplung 18 statt. Die Überlagerungswelle 16 rotiert hierbei mit geringer Drehzahl rückwärts. Beim Arbeiten mit der hydrodynamischen Kupplung 11 (d.h. bei gelöster Überbrückungskupplung 18) kann - vorzugsweise in einem oberen Teil des unteren Drehzahlbereichs - durch Variieren des Füllungsgrades der hydrodynamischen Bremse 17 die negative Drehzahl der Überlagerungswelle 16 derart eingestellt werden, daß die hydrodynamische Kupplung 11 mit möglichst geringem Schlupf, also nahezu verlustfrei arbeitet. Mit anderen Worten: Die Kupplung 11 arbeitet mit dem maximalen Füllungsgrad, wobei das Schöpfrohr 24 auf Förderung Null eingestellt ist, so daß die Verluste im äußeren Flüssigkeitskreislauf weitgehend oder vollkommen vermieden werden. Soll die Ausgangswelle 14 mit einer erhöhten Drehzahl, d.h. im oberen Drehzahlbereich rotieren, so wird der Wandler 15 gefüllt und die hydrodynamische Bremse 17 durch Entleeren ausgeschaltet. Zweckmäßig wird hierbei auch noch die Überbrückungskupplung eingeschaltet, so daß das Wandler-Pumpenrad 25 mit der Drehzahl der Eingangswelle 10 rotiert. In jedem Fall sind nun zwei parallele Kraftwege wirksam; d.h. nun überträgt der Wandler 15 einen Teil der Gesamtleistung auf das Differentialgetriebe 13, während der übrige größere Leistungsanteil weiterhin auf dem oben beschriebenen normalen Kraftweg übertragen wird.

Wenn man in den Figuren 1 bis 3 die Überbrückungskupplung 18 wegläßt, dann ist es zweckmäßig, das Wandler-Pumpenrad 25 nicht an die Zwischenwelle 12, sondern an die mit der Eingangswelle 10 rotierende Kupplungsschale 23 zu koppeln. In den Fig. 1 bis 3 kann bei Bedarf auch die gesamte hydrodynamische Kupplung 11 einschließlich der Überbrückungskupplung 18 entfallen; so z. B. für den Antrieb eines Kreiselverdichters, dessen Drehzahl nur im oberen Drehzahlbereich variiert wird und darunter konstant bleibt.

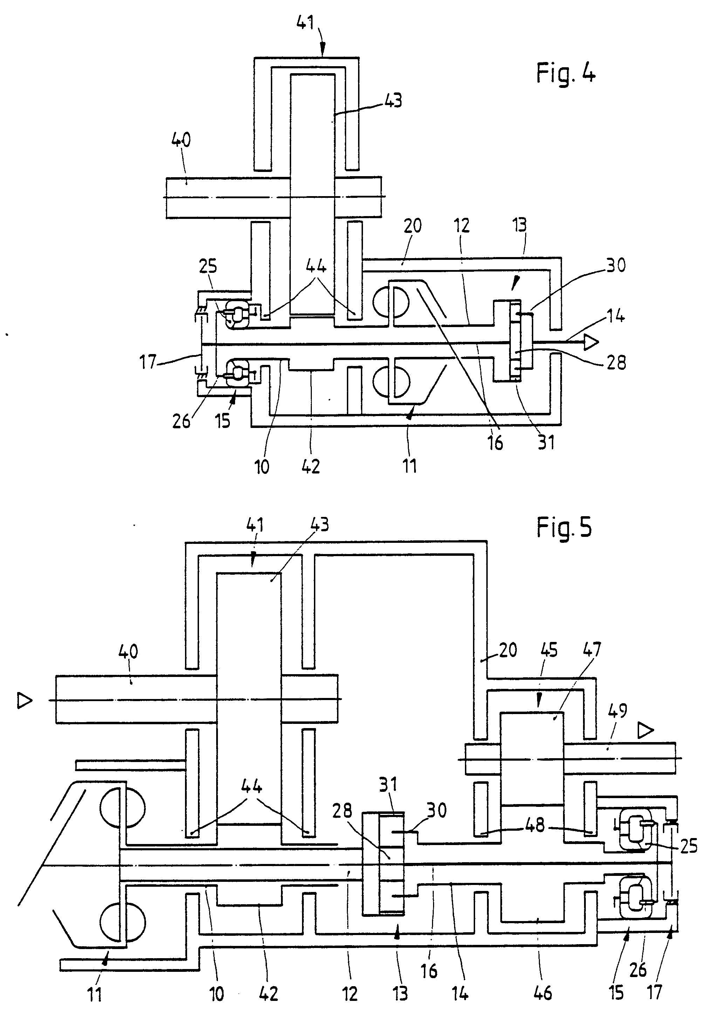

Unter Umständen ist es erforderlich, das erfindungsgemäße Kraftübertragungsaggregat an eine verhältnismäßig langsam rotierende Antriebsmaschine anzupassen. Hierzu kann gemäß den Figuren 4 und 5 die Eingangswelle 10 über ein Hochgang-Zahnradgetriebe 41 mit einer versetzt angeordneten Antriebswelle 40 verbunden werden. Das Hochgang-Zahnradgetriebe 41 hat ein auf der Eingangswelle 10 sitzendes Ritzel 42 und ein auf der Antriebswelle 40 sitzendes Großrad 43. In diesem Falle ist es zweckmäßig, die Lager 44 für die Eingangswelle 10 unmittelbar zu beiden Seiten des Ritzels 42 anzuordnen. Die in Figur 4 dargestellte Anordnung der übrigen Aggregat-Elemente ist im Anspruch 8 beschrieben.

Gemäß Figur 5 kann die Ausgangswelle 14 über ein Ausgangs-Zahnradgetriebe 45 mit einer versetzt angeordneten Abtriebswelle 49 verbunden werden. Die Zahnräder dieses Getriebes 45 sind mit 46 und 47 bezeichnet und die Lager der Ausgangswelle 14 mit 48. Die Figur 5 zeigt ein Ausführungsbeispiel, bei dem sowohl ein Hochgang-Zahnradgetriebe 41 als auch ein Ausgangsgetriebe 45 vorhanden ist. Die dargestellte Anordnung der Aggregat-Elemente ist im Anspruch 11 beschrieben. Bei Bedarf kann man jedoch in Figur 5 das Hochganggetriebe 41 weglassen und die hydrodynamische Kupplung 11, ähnlich wie in den Figuren 1 bis 3, unmittelbar über eine außen angeordnete koaxiale Eingangswelle 10 antreiben. Gemäß Figur 5 wird das Umlaufrädergetriebe 13 als Verteilergetriebe betrieben, wogegen es in den Figuren 1 bis 4 als Sammelgetriebe fungiert.

**Patentansprüche**

1. Kraftübertragungsaggregat zum Antrieb einer drehzahlvariablen Arbeitsmaschine, mit den folgenden Merkmalen:
a) eine Eingangswelle (10) ist - entweder mit oder ohne Zwischenschaltung einer hydrodynamischen Kupplung (11), deren Füllungsgrad verstellbar ist, und einer Zwischenwelle (12) - an ein erstes Getriebeglied (31; 30) eines Differentialgetriebes (13) gekoppelt;
b) ein zweites Getriebeglied (30; 28) des Differentialgetriebes (13) ist dauernd an eine Ausgangswelle (14) gekoppelt;
c) ein drittes Getriebeglied (28; 31; 30) des Differentialgetriebes (13) ist mittels einer Überlagerungswelle (16) an eine Bremse (17) und an ein Turbinenrad (26) eines füll- und entleerbaren sowie verstellbaren hydrodynamischen Drehmomentwandlers (15) gekoppelt, so daß die Ausgangswelle (14)
ca) bei wirksamer Bremse (17) und bei entleertem Drehmomentwandler in einem unteren Drehzahlbereich und
cb) bei gelöster Bremse (17) und bei gefülltem Drehmomentwandler (15) in einem oberen Drehzahlbereich rotiert,
d) dadurch gekennzeichnet, daß die zum Abbremsen der Überlagerungswelle (16) dienende Bremse (17) als hydrodynamische Bremse ausgebildet ist und eine Steuereinrichtung zum Einstellen unterschiedlicher Füllungsgrade aufweist.

2. Kraftübertragungsaggregat nach Anspruch 1, dadurch gekennzeichnet, daß - wie bei ähnlichen Getrieben bekannt - sämtliche Wellen (12; 14; 16) sowie das Differentialgetriebe (13), der hydrodynamische Drehmomentwandler (15) und die hydrodynamische Bremse (17) zueinander koaxial angeordnet sind.

3. Kraftübertragungsaggregat nach Anspruch 2, worin zwischen dem hydrodynamischen Drehmomentwandler (15) und dem dritten Getriebeglied (31; 30) des Differentialgetriebes (13) ein Getriebe (19) mit konstanter Über- oder Untersetzung angeordnet ist, dadurch gekennzeichnet, daß das Getriebe (19) als Planeten-Standgetriebe ausgebildet und ebenfalls koaxial zu den übrigen Aggregate-Elementen angeordnet ist (Fig. 2 oder 3).

4. Kraftübertragungsaggregat nach Anspruch 3 mit hydrodynamischer Kupplung (11), dadurch gekennzeichnet, daß die Aggregat-Elemente in der folgenden Reihenfolge hintereinander angeordnet sind:
a) Eingangswelle (10)
b) hydrodynamische Kupplung (11)
c) hydrodynamischer Drehmomentwandler (15)
d) hydrodynamische Bremse (17)
e) Differentialgetriebe (13)
f) Ausgangswelle (14),
und daß die als Hohlwelle ausgebildete Überlagerungswelle (16) die Zwischenwelle (12) umhüllt (Fig. 1 bis 3).

5. Kraftübertragungsaggregat nach Anspruch 3 und 4, dadurch gekennzeichnet, daß das Planeten-Standgetriebe (19) zwischen der hydrodynamischen Bremse (17) und dem Differentialgetriebe (13) angeordnet ist (Fig. 2 und 3).

6. Kraftübertragungsaggregat nach einem der Ansprüche 1 bis 5, mit hydrodynamischer Kupplung (11) und mit einer hierzu parallel angeordneten mechanischen Überbrückungskupplung (18), dadurch gekennzeichnet, daß das Pumpenrad (25) des hydrodynamischen Drehmomentwandlers (15) dauernd an die Zwischenwelle (12) gekoppelt ist. (Fig. 1 bis 3).

7. Kraftübertragungsaggregat mit hydrodynamischer Kupplung (11), nach Anspruch 1, worin eine Antriebswelle (40) über ein Hochgang-Zahnradgetriebe (41) die Eingangswelle (10) antreibt, dadurch gekennzeichnet, daß das Ritzel (42) des Hochgang-Zahnradgetriebes (41) und die beiderseits des Ritzels befindlichen Lager (44) der Eingangswelle (10) zwischen der hydrodynamischen Kupplung (11) und einem der übrigen Aggregate-Elemente (13 oder 15) angeordnet sind (Fig. 4 oder 5).

8. Kraftübertragungsaggregat nach Anspruch 7, gekennzeichnet durch die folgenden Merkmale:
a) die als Hohlwelle ausgebildete Eingangswelle (10) und die ebenfalls als Hohlwelle ausgebildete Zwischenwelle (12) umhüllen die zentrale Überlagerungswelle (16);
b) die Aggregate-Elemente sind in der folgenden Reihenfolge hintereinander angeordnet:
ba) hydrodynamische Bremse (17)
bb) Turbinenrad (26) des Drehmomentwandlers (15)
bc) Pumpenrad (25) des Drehmomentwandlers (15)
bd) Ritzel (42) des Hochgang-Zahnradgetriebes (41)
be) hydrodynamische Kupplung (11)
bf) Differentialgetriebe (13)
bg) Ausgangswelle (14);
c) das Pumpenrad (25) des Drehmomentwandlers (15) ist dauernd an die Eingangswelle (10) gekoppelt (Fig. 4).

9. Kraftübertragungsaggregat nach Anspruch 1, gekennzeichnet durch die folgenden Merkmale:
a) die Ausgangswelle (14) ist als Hohlwelle ausgebildet, umhüllt die Überlagerungswelle (16) und trägt in ihrem mittleren Bereich ein Zahnrad (46) eines Ausgangsgetriebes (45);
b) das genannte Zahnrad (46) ist mit den beidseitig angeordneten Lagern (48) der Ausgangswelle (14) zwischen einerseits dem Differentialgetriebe (13) und andererseits dem hydrodynamischen Drehmomentwandler (15) und der hydrodynamischen Bremse (17), die sich am äußeren Ende des Aggregats befinden, angeordnet;
c) das Pumpenrad (25) des Drehmomentwandlers (15) ist dauernd mit der Ausgangswelle (14) gekoppelt (Fig. 5).

10. Kraftübertragungsaggregat nach den Ansprüchen 7 und 9, gekennzeichnet durch die folgenden Merkmale:
a) die als Hohlwelle ausgebildete Eingangswelle (10) umhüllt die Zwischenwelle (12);
b) die Aggregate-Elemente sind nacheinander in der folgenden Reihenfolge angeordnet:
ba) hydrodynamische Kupplung (11),
bb) Ritzel (42) des Hochgang-Zahnradgetriebes (41),
bc) Differentialgetriebe (13),
bd) Zahnrad (46) des Ausgangsgetriebes (45),
be) Pumpenrad (25) des Drehmomentwandlers (15),
bf) Turbinenrad (26) des Drehmomentwandlers (15),
bg) hydrodynamische Bremse (17) (Fig. 5).

**Claims**

1. Power transmission assembly for driving a variable-r.p.m. machine, having the following features:
a) an input shaft (10) - either with or without in-line arrangement of a hydrodynamic coupling (11), in which the filling degree is adjustable, and of an intermediate shaft (12) - is coupled to a first gear component (31; 30) of a differential gear (13);
b) a second gear component (30; 28) of the differential gear (13) is permanently coupled to an output shaft (14);
c) a third gear component (28; 31; 30) of the differential gear (13) is coupled by means of a superimposition shaft (16) to a brake (17) and to a turbine wheel (26) of a fillable and emptiable and also adjustable hydrodynamic torque converter (15), so that the output shaft (14)
ca) rotates in a lower rotational speed range when the brake (17) is effective and when the torque converter is emptied and
cb) rotates in an upper speed range when the brake (17) is released and when the torque converter (15) is filled,
d) characterised in that the brake (17) serving to brake the superimposition shaft (16) is constructed as a hydrodynamic brake and has a control appliance to regulate various degrees of filling.

2. Power transmission assembly according to Claim 1, characterised in that - as with similar gears - all the shafts (12; 14; 16) and also the differential gear (13) , the hydrodynamic torque converter (15) and the hydrodynamic brake (17) are disposed coaxially with respect to one another.

3. Power transmission assembly according to Claim 2, in which between the hydrodynamic torque converter (15) and the third gear component (31; 30) of the differential gear (13) is disposed a gear (19) having a constant step-up or step-down facility, characterised in that the gear is constructed as a constant ratio planetary gear and is also disposed coaxially to the remaining assembly components (Fig. 2 or 3).

4. Power transmission assembly according to Claim 3 having a hydrodynamic coupling (11), characterised in that the assembly components are disposed one behind the other in the following sequence:
a) input shaft (10)
b) hydrodynamic coupling (11)
c) hydrodynamic torque converter (15)

d) hydrodynamic brake (17)

e) differential gear (13)

f) output shaft (14),

and in that the superimposition shaft (16) constructed as a hollow shaft encloses the intermediate shaft (12) (Fig. 1 to 3).

5. Power transmission assembly according to Claim 3 and 4, characterised in that the constant-ratio planetary gearing (19) is disposed between the hydrodynamic brake (17) and the differential gear (13) (Fig. 2 and 3).

6. Power transmission assembly according to one of Claims 1 to 5, having a hydrodynamic coupling (11) and a mechanical lock-up coupling (18) disposed parallel thereto, characterised in that the pump impeller (25) of the hydrodynamic torque converter (15) is permanently coupled to the intermediate shaft (12) (Fig. 1 to 3).

7. Power transmission assembly having a hydrodynamic coupling (11) according to Claim 1, in which a drive shaft (40) drives the input shaft (10) via a step-up gear (41), characterised in that the pinion (42) of the step-up gear (41) and the bearings (44) of the input shaft (10) located on both sides of the pinion are disposed between the hydrodynamic coupling (11) and one of the remaining assembly elements (13 or 15) (Fig. 4 or 5).

8. Power transmission assembly according to Claim 7, characterised by the following features:

a) the input shaft (10) constructed as a hollow shaft and the intermediate shaft (12) also constructed as a hollow shaft enclose the central superimposition shaft (16);

b) the assembly components are disposed one behind the other in the following sequence:

ba) hydrdynamic brake (17)

bb) turbine wheel (26) of the torque converter (15)

bc) pump impeller (25) of the torque converter (15)

bd) pinion (42) of the step-up gear (41)

be) hydrodynamic coupling (11)

bf) differential gear (13)

bg) output shaft (14);

c) the pump impeller (25) of the torque converter (15) is permanently coupled to the input shaft (10) (Fig. 4).

9. Power transmission assembly according to Claim 1, characterised by the following features:

a) the output shaft (14) is constructed as a hollow shaft, encloses the superimposition shaft (16) and in its central region bears a gear wheel (43) of an output gear (45);

b) the said gear wheel (46) is disposed, whith the bearings (48) of the output shaft (14) disposed on both sides, between the differential gear (13) on the one hand and the hydrodynamic torque converter (15) and the hydrdynamic brake (17) on the other hand, which are located at the outer end of the assembly;

c) the pump impeller (25) of the torque converter (15) is permanently coupled with the output shaft (14) (Fig. 5).

10. Power transmission assembly according to Claims 7 and 9, characterised by the following features:

a) the input shaft (10) constructed as a hollow shaft encloses the intermediate shaft (12);

b) the assembly components are disposed one behind the other in the following sequence:

ba) hydrodynamic coupling (11),

bb) pinion (42) of the step-up gear (41),

bc) differential gear (13),

bd) gear wheel (46) of the output gear (45),

be) pump impeller (25) of the torque converter (15),

bf) turbine wheel (26) of the torque converter (15),

bg) hydrodynamic brake (17) (Fig. 5).


**Revendications**

1. Ensemble de transmission de force pour l'entraînement d'une machine menée à vitesse de rotation variable, présentant les particularités suivantes:

a) un arbre d'entrée (10) est - par l'intermédiaire ou non d'un coupleur hydrodynamique (11) à degré de remplissage variable et d'un arbre intermédiaire (12) - relié à un premier composant (31; 30) d'un différentiel (13);

b) un deuxième composant (30; 28) du différentiel (13) est continuellement accouplé à un arbre de sortie (14);

c) un troisième composant (28; 31; 30) du différentiel (13) est, au moyen d'un arbre de superposition (16), accouplé à un frein (17) et à une roue-turbine (26) d'un convertisseur de couple hydrodynamique (15) remplissable, vidangeable et réglable, de telle sorte que l'arbre de sortie (14)

ca) tourne dans une zone inférieure de vitesse de rotation, lorsque le frein (17) est actif et que le convertisseur (15) est vidangé, et

cb) tourne dans une zone supérieure de vitesse de rotation, lorsque le frein (17) est relâché et que le convertisseur (15) est rempli,

cet ensemble de transmission étant caractérisé en ce que:

d) le frein (17) servant à freiner l'arbre de superposition est réalisé comme frein hydrodynamique et possède un dispositif de commande pour l'indexage de différents degrés de remplissage.

2. Ensemble de transmission de force selon la Revendication 1, caractérisé en ce que - comme déjà connu pour des transmissions semblables - tous les arbres (12; 14; 16), ainsi que le différentiel (13), le convertisseur de couple hydrodynamique (15) et le frein hydrodynamique (17) sont réciproquement agencés de façon coaxiale.

3. Ensemble de transmission de force selon la Revendication 2 comportant, entre le convertisseur hydrodynamique (15) et le troisième composant (31, 30) du différentiel (13), un train d'engrenge (19) à rapport de multiplication ou de démultiplication constant, caractérisé en ce que le train d'engrenage (19) est exécuté comme train planétaire coaxialement agencé par rapport aux autres éléments constitutifs de l'ensemble (fig. 2 ou 3).

4. Ensemble de transmission de force selon la Revendication 3, avec coupleur hydrodynamique (11), caractérisé en ce que les éléments constitutifs de l'ensemble sont agencés l'un à la suite de l'autre dans l'ordre suivant:
    a) arbre d'entrée (10),
    b) coupleur hydrodynamique (11),
    c) convertisseur de couple hydrodynamique (15),
    d) frein hydrodynamique (17),
    e) différentiel (13),
    f) arbre de sortie (14),
et caractérisé en ce que l'arbre de superposition (16) exécuté comme arbre creux entoure l'arbre intermédiaire (12) (fig. 1 à 3).

5. Ensemble de transmission de force selon les Revendications 3 et 4, caractérisé en ce que le train planétaire à rapport de vitesse constant (19) est agencé entre le frein hydrodynamique (17) et le différentiel (13) (fig. 2 et 3).

6. Ensemble de transmission de force selon l'une des Revendications 1 à 5, avec coupleur hydrodynamique (11) et, agencé parallèlement à lui, un embrayage de pontage mécanique (18), caractérisé en ce que la roue-pompe (25) du convertisseur de couple hydrodynamique (15) est continuellement accouplée à l'arbre intermédiaire (12) (fig. 1 à 3).

7. Ensemble de transmission de force à coupleur hydrodynamique (11), selon Revendication 1, comportant un arbre d'entraînement (40) entraînant l'arbre d'entrée (10) par un multiplicateur (41), caractérisé en ce que le pignon (42) du multiplicateur (41) et les paliers (44) de l'arbre d'entrée (10) de part et d'autre du pignon (42) sont agencés entre le coupleur hydrodynamique (11) et l'un des éléments constitutifs restants (13 ou 15) de l'ensemble de transmission.

8. Ensemble de transmission de force selon la Revendication 7, caractérisé par les particularités suivantes:
    a) l'arbre d'entrée (10) et l'arbre intermédiaire (12), tous deux exécutés comme arbres creux, entourent l'arbre central de superposition (16);
    b) les éléments constitutifs de l'ensemble de transmission sont agencés l'un à la suite de l'autre dans l'ordre suivant:
      ba) frein hydrodynamique (17),
      bb) roue-turbine (26) du convertisseur de couple (15),
      bc) roue-pompe (25) du convertisseur de couple (15),
      bd) pignon (42) du multiplicateur (41),
      be) coupleur hydrodynamique (11),
      bf) différentiel (13),
      bg) arbre de sortie (14);
    c) la roue-pompe (25) du convertisseur de couple (15) est continuellement accouplée à l'arbre d'entrée (10) (fig.4).

9. Ensemble de transmission de force selon la Revendication 1, caractérisé par les particularités suivantes:
    a) l'arbre de sortie (14) est exécuté comme arbre creux, il entoure l'arbre de superposition (16) et il porte dans sa zone médiane une roue dentée (46) d'un engrenage de sortie (45);
    b) la roue dentée précitée (46) est, avec les paliers bilatéraux (48) de l'arbre de sortie (14), agencée entre, d'un côté, le différentiel (13) et, de l'autre côté, le convertisseur de couple hydrodynamique (15) et le frein hydrodynamique (17) qui se trouvent en bout à l'extérieur de l'ensemble de transmission;
    c) la roue-pompe (25) du convertisseur de couple (15) est continuellement accouplée à l'arbre de sortie (14) (fig.5).

10. Ensemble de transmission de force selon les Revendications 7 et 9, caractérisé par les particularités suivantes:
    a) l'arbre d'entrée (10) exécuté comme arbre creux entoure l'arbre intermédiaire (12);
    b) les éléments constitutifs de l'ensemble de transmission sont agencés l'un à la suite de l'autre dans l'ordre suivant:
      ba) coupleur hydrodynamique (11),
      bb) pignon (42) du multiplicateur (41),
      bc) différentiel (13),
      bd) roue dentée (46) de l'engrenage de sortie (45),
      bc) roue-pompe (25) du convertisseur de couple (15),
      bf) roue-turbine (26) du convertisseur de couple (15),
      bg) frein hydrodynamique (17) (fig. 5).

**0 204 728**

Fig. 1

Fig. 2

Fig. 3

1

Fig. 4

Fig. 5